# EUROPEAN PATENT APPLICATION

(11) **EP 4 571 617 A1**
(43) Date of publication of application: **18.06.2025**
(21) Application number: 23851572.0
(22) Date of filing: 21.07.2023
(51) Int. Cl.: G06Q 20/04

(54) **BILL PROCESSING METHOD AND DEVICE FOR TRANSACTION BILL**

(30) Priority: 10.08.2022 CN 202210958640
(71) Applicant: Alipay (Hangzhou) Information Technology Co., Ltd., Hangzhou, Zhejiang 310000 (CN)
(72) Inventor: MA, Shuo, Hangzhou, Zhejiang 310000 (CN); MENG, Chaofeng, Hangzhou, Zhejiang 310000 (CN)
(74) Representative: Finnegan Europe LLP
(86) International application number: PCT/CN2023/108615
(87) International publication number: WO 2024/032350

(57) **Abstract**

Embodiments of this specification provide a receipt processing method and apparatus for a transaction bill. The receipt processing method for a transaction bill includes: obtaining at least one transaction bill obtained after transaction processing is performed with a merchant based on a payment voucher of an institution; classifying the at least one transaction bill based on a merchant identifier if a receipt generation policy of the institution is a periodic generation policy, to obtain a bill subset corresponding to each merchant; sending a receipt application to a receipt service platform of each merchant, to perform receipt issuance for the bill subset; and receiving a receipt that is of each bill subset and that is returned by the receipt service platform, reading receipt additional information of the receipt, and associating the receipt additional information with the receipt.

## Description

### TECHNICAL FIELD

This document relates to the data processing field, and in particular, to a receipt processing method and apparatus for a transaction bill.

### BACKGROUND

With development of Internet technologies, an electronic receipt is widely applied. Like an ordinary paper receipt, the electronic receipt has a code issued by a tax institution. Therefore, the electronic receipt has the same voucher effect as the ordinary paper receipt, but the electronic receipt is more convenient than the ordinary paper receipt in operations such as receipt issuance and reimbursement. In a process of reimbursing expense by using a receipt, an electronic form such as a reimbursement application form needs to be filled first, and then the reimbursement application form for which filling is completed is submitted to a reviewer for review. After review succeeds, the receipt is reimbursed. An entire reimbursement process is relatively cumbersome.

### SUMMARY

One or more embodiments of this specification provide a receipt processing method for a transaction bill. The receipt processing method for a transaction bill includes: obtaining at least one transaction bill obtained after transaction processing is performed with a merchant based on a payment voucher of an institution; classifying the at least one transaction bill based on a merchant identifier if a receipt generation policy of the institution is a periodic generation policy, to obtain a bill subset corresponding to each merchant; sending a receipt application to a receipt service platform of each merchant, to perform receipt issuance for the bill subset; and receiving a receipt that is of each bill subset and that is returned by the receipt service platform, reading receipt additional information of the receipt, and associating the receipt additional information with the receipt.

One or more embodiments of this specification provide a receipt processing apparatus for a transaction bill, including: a bill obtaining module, configured to obtain at least one transaction bill obtained after transaction processing is performed with a merchant based on a payment voucher of an institution; a bill classification module, configured to run if a receipt generation policy of the institution is a periodic generation policy, where the bill classification module is configured to classify the at least one transaction bill based on a merchant identifier, to obtain a bill subset corresponding to each merchant; an application sending module, configured to send a receipt application to a receipt service platform of each merchant, to perform receipt issuance for the bill subset; and an information association module, configured to: receive a receipt that is of each bill subset and that is returned by the receipt service platform, read receipt additional information of the receipt, and associate the receipt additional information with the receipt.

One or more embodiments of this specification provide a receipt processing device for a transaction bill, including: a processor; and a storage, configured to store computer-executable instructions. When the computer-executable instructions are executed, the processor is enabled to perform the following operations: obtaining at least one transaction bill obtained after transaction processing is performed with a merchant based on a payment voucher of an institution; classifying the at least one transaction bill based on a merchant identifier if a receipt generation policy of the institution is a periodic generation policy, to obtain a bill subset corresponding to each merchant; sending a receipt application to a receipt service platform of each merchant, to perform receipt issuance for the bill subset; and receiving a receipt that is of each bill subset and that is returned by the receipt service platform, reading receipt additional information of the receipt, and associating the receipt additional information with the receipt.

One or more embodiments of this specification provide a storage medium, configured to store computer-executable instructions. When the computer-executable instructions are executed by a processor, the following procedure is implemented: obtaining at least one transaction bill obtained after transaction processing is performed with a merchant based on a payment voucher of an institution; classifying the at least one transaction bill based on a merchant identifier if a receipt generation policy of the institution is a periodic generation policy, to obtain a bill subset corresponding to each merchant; sending a receipt application to a receipt service platform of each merchant, to perform receipt issuance for the bill subset; and receiving a receipt that is of each bill subset and that is returned by the receipt service platform, reading receipt additional information of the receipt, and associating the receipt additional information with the receipt.

### BRIEF DESCRIPTION OF DRAWINGS

To describe the technical solutions in one or more embodiments of this specification more clearly, the following briefly describes the accompanying drawings needed for describing the embodiments. Clearly, the accompanying drawings in the following descriptions show merely some embodiments recorded in this specification, and a person of ordinary skill in the art can still derive other drawings from these accompanying drawings without creative efforts.
FIG. 1 is a processing flowchart of a receipt processing method for a transaction bill according to one or more embodiments of this specification;
FIG. 2 is a schematic diagram of a receipt obtaining manner according to one or more embodiments of this specification;
FIG. 3 is a schematic diagram of a receipt processing process according to one or more embodiments of this specification;
FIG. 4 is a schematic diagram of a receipt sending process according to one or more embodiments of this specification;
FIG. 5 is a schematic diagram of a record-related data obtaining process according to one or more embodiments of this specification;
FIG. 6 is a processing flowchart of a receipt processing method for a transaction bill that is applied to an invoice service scenario according to one or more embodiments of this specification;
FIG. 7 is a processing flowchart of another receipt processing method for a transaction bill according to one or more embodiments of this specification;
FIG. 8 is a schematic diagram of a receipt processing apparatus for a transaction bill according to one or more embodiments of this specification; and
FIG. 9 is a schematic structural diagram of a receipt processing device for a transaction bill according to one or more embodiments of this specification.

### DETAILED DESCRIPTION OF EMBODIMENTS

To make a person skilled in the art better understand the technical solutions in one or more embodiments of this specification, the following clearly and completely describes the technical solutions in the one or more embodiments of this specification with reference to the accompanying drawings in the one or more embodiments of this specification. Clearly, the described embodiments are merely some rather than all of the embodiments of this specification. All other embodiments obtained by a person of ordinary skill in the art based on the one or more embodiments of this specification without creative efforts shall fall within the protection scope of this document.

An embodiment of a receipt processing method for a transaction bill provided in this specification is as follows: In the receipt processing method for a transaction bill provided in this embodiment, for a transaction bill obtained after transaction processing is performed based on a payment voucher of an institution, a corresponding receipt is generated by performing data integration with a merchant participating in transaction processing, and the transaction bill and information related to the transaction bill are associated with the receipt as receipt additional information of the receipt. Specifically, if a receipt generation policy of the institution is a periodic generation policy, when it is detected that a receipt generation period of the institution expires, at least one transaction bill obtained after transaction processing is performed with the merchant based on the payment voucher of the institution is classified, to obtain a bill subset corresponding to each merchant; a receipt application is sent to a receipt service platform of each merchant, to perform receipt issuance for the corresponding bill subset; and after the receipt obtained after the merchant performs receipt issuance, receipt additional information of the receipt is read and associated with the corresponding receipt. In this way, for transaction processing performed based on the payment voucher of the institution, receipt issuance is automatically performed, and the receipt additional information is associated with the receipt after receipt issuance, so that an employee does not need to perform receipt issuance offline. The receipt additional information is associated with the receipt, to improve validity of the receipt in a use process. A data support is provided for the receipt based on the receipt additional information, to improve a receipt issuance efficiency of the institution for payment.

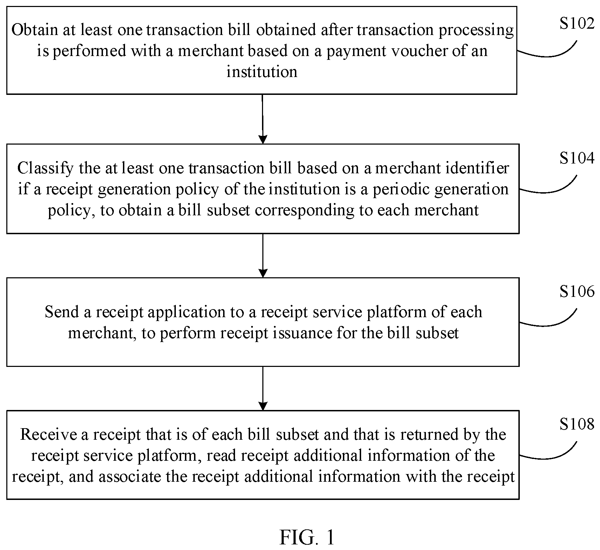

As shown in FIG. 1, the receipt processing method for a transaction bill provided in an embodiment specifically includes step S102 to step S108.

Step S102: Obtain at least one transaction bill obtained after transaction processing is performed with a merchant based on a payment voucher of an institution.

The institution in this embodiment includes various forms of organizations such as an enterprise, a public institution, or a social group. In addition, the institution not only includes an organization at a current level, but also includes an internal organization of the institution, for example, an institution department or a branch. The institution member includes institution staff and a related person. The transaction bill is associated with the institution and the merchant.

The payment voucher includes a voucher that is set by the institution for payment, receipt issuance, and/or reimbursement of the institution member. The payment voucher of the institution can uniquely identify the institution. The payment voucher of the institution can exist in a form of an institution code, for example, an identification code such as a two-dimensional code, a barcode, or an audio code. Integrated processing of payment, receipt issuance, and reimbursement can be implemented based on the voucher of the institution. In addition, the payment voucher of the institution can be further used to identify a member identity of the institution member in the institution. For example, the payment voucher is used as a digital work card of the institution employee, and the institution employee can collect, based on the payment voucher, welfare and subsidies issued by the institution.

In specific implementations, after the transaction bill obtained after transaction processing is performed with the merchant based on the payment voucher of the institution is obtained, a receipt generation policy configured by the institution is first read. If the receipt generation policy of the institution is a periodic generation policy, the transaction bill is stored, and the at least one transaction bill obtained after transaction processing is performed with the merchant based on the payment voucher of the institution in a current period is obtained when a receipt generation period expires.

If the receipt generation policy of the institution is an instant generation policy, each time a transaction bill obtained after transaction processing is performed with the merchant based on the payment voucher of the institution is obtained, receipt issuance for the transaction bill is performed. In an optional implementation provided in this embodiment, if the receipt generation policy of the institution is an instant generation policy, a receipt application is sent to a receipt service platform of the merchant, to perform receipt issuance for the at least one transaction bill; and a receipt that is of the at least one transaction bill and that is returned by the receipt service platform is received, receipt additional information of the receipt is read, and the read receipt additional information and the at least one transaction bill are associated with the receipt, to obtain a receipt dataset of the receipt.

Specifically, the transaction bill obtained after transaction processing is performed with the merchant based on the payment voucher of the institution is obtained. If the receipt generation policy of the institution is the instant generation policy, the receipt application is sent to the receipt service platform of the merchant, to perform receipt issuance for the transaction bill. After the receipt that is of the transaction bill and that is obtained after receipt issuance, the receipt additional information of the receipt is read and associated with the receipt.

The transaction bill obtained after transaction processing is performed with the merchant based on the payment voucher of the institution is obtained. If the receipt generation policy of the institution is the periodic generation policy, the transaction bill is stored. If it is detected that the receipt generation period expires, the at least one transaction bill obtained after transaction processing is performed with the merchant based on the payment voucher of the institution in the receipt generation period is obtained, and the at least one transaction bill is classified based on the merchant identifier, to obtain a bill subset corresponding to each merchant; a receipt application is sent to a receipt service platform of each merchant, to perform receipt issuance for the bill subset; and a receipt that is of each bill subset and that is obtained after receipt issuance, to perform receipt issuance for the bill subset.

The receipt service platform of the merchant includes a platform provided by the merchant to perform receipt issuance for a transaction bill generated by or associated with the merchant. Optionally, the receipt service platform of the merchant includes a service platform corresponding to a receipt issuance address of a receipt issuance record of the merchant, and/or a service platform corresponding to an authorized platform address recorded in a receipt authorization record of the merchant.

Step S104: Classify the at least one transaction bill based on a merchant identifier if a receipt generation policy of the institution is a periodic generation policy, to obtain a bill subset corresponding to each merchant.

The receipt generation policy includes a manner pre-configured by the institution to perform receipt issuance for the institution. In this embodiment, the receipt generation policy includes the periodic generation policy and the instant generation policy. The periodic generation policy includes a period in which a specific quantity of periods of time are configured, and receipt issuance is performed for a transaction bill in the period when the period expires. For example, a specified receipt generation period is from the 20th of each month to the 10th of the next month, and all transaction bills generated in this period are issued together on the 10th of the next month. The instant generation policy is a receipt issuance form in which receipts of all transaction bills are issued one by one and a receipt of a transaction bill is issued each time the transaction bill is obtained.

In this embodiment, a receipt issuance process of the institution is specifically described by using an example in which the receipt generation policy of the institution is the periodic generation policy. In addition, step S104 can be further replaced by: classifying the at least one transaction bill based on the merchant identifier, to obtain the bill subset corresponding to each merchant; and forming a new implementation with another processing step provided in this embodiment.

In specific implementations, after at least one transaction order is obtained, because a corresponding merchant needs to perform receipt issuance for the transaction order, the at least one transaction bill is classified based on the merchant identifier, to obtain the bill subset corresponding to each merchant. After the bill subset corresponding to each merchant is obtained, the receipt application is sent to the receipt service platform of each merchant, to perform receipt issuance for the bill subset.

Step S102 and step S104 can be further replaced by: classifying, based on the merchant identifier, the at least one transaction bill obtained after transaction processing is performed based on the payment voucher of the institution, to obtain the bill subset corresponding to each merchant; and forming a new implementation with another processing step provided in this embodiment; or classifying the at least one transaction bill obtained after transaction processing is performed based on the payment voucher of the institution, to obtain a bill subset corresponding to each merchant; and forming a new implementation with another processing step provided in this embodiment.

Step S106: Send a receipt application to a receipt service platform of each merchant, to perform receipt issuance for the bill subset.

In this embodiment, the receipt service platform of the merchant includes a platform provided by the merchant to perform receipt issuance for a transaction bill generated by or associated with the merchant, which can be a platform used by the merchant to perform receipt issuance, or can be a third-party platform authorized by the merchant to perform receipt issuance. The receipt application includes an application sent to the receipt service platform of the merchant to perform receipt issuance for a corresponding bill by the merchant.

After the bill subset corresponding to each merchant is obtained, the receipt application is sent to the receipt service platform of each merchant, to perform receipt issuance for the bill subset. Based on this, to enable the merchant to perform receipt issuance, in an optional implementation provided in this embodiment, after the bill subset corresponding to each merchant is obtained, the receipt service platform of the merchant is determined in the following manner: querying a receipt issuance record and/or a receipt authorization record of each merchant; and using, as the receipt service platform, a service platform corresponding to a receipt issuance address corresponding to the receipt issuance record or an authorized platform address recorded in the receipt authorization record, and sending the receipt application to the receipt service platform of each merchant, to perform receipt issuance for the bill subset.

Optionally, if a query result for a target merchant is empty, a receipt generation request is generated based on a target bill subset corresponding to the target merchant, and the receipt generation request is sent to the target merchant; a target receipt that is of the target bill subset and that is sent by the target merchant is obtained, and target additional information of the target receipt is read; and the target additional information and a transaction bill in the target bill subset are associated with the target receipt.

Specifically, after the bill subset corresponding to each merchant is obtained, the receipt service platform of each merchant is determined. In a process of determining the receipt service platform of each merchant, the receipt issuance record or the receipt authorization record of each merchant is queried. If the query result is not empty, the service platform corresponding to the receipt issuance address carried in the queried receipt issuance record or the service platform corresponding to the authorized platform address recorded in the receipt authorization record is determined as the receipt service platform of the merchant, and the receipt application for the bill subset of the merchant is sent to the determined receipt service platform of each merchant.

If the query result for the target merchant after the receipt issuance record and/or the receipt authorization record of each merchant are/is queried is empty, the receipt service platform of the merchant cannot be determined. Therefore, the receipt generation request is generated based on the transaction bill included in the target bill subset corresponding to the target merchant and sent to the merchant, so that the merchant performs receipt issuance; obtains the target receipt of the target bill subset issued and uploaded by the target merchant offline or through another channel; and reads the target additional information of the target receipt, and associates the target additional information with the target receipt.

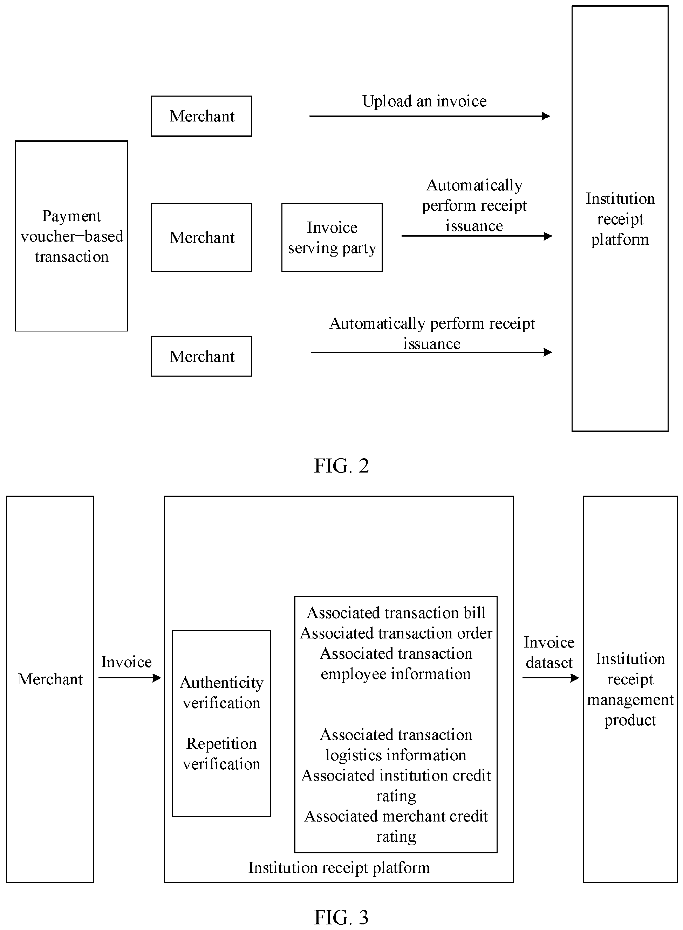

This embodiment is applied to an institution receipt platform. The institution receipt platform can be an independent platform, or can be a sub-platform mounted on the third-party platform, for example, an institution receipt platform on the third-party payment platform. Three processes of interacting with the merchant to generate an electronic receipt are provided. As shown in FIG. 2, the first process is to send an invoice generation reminder to the merchant when the receipt service platform of the merchant cannot be obtained. The merchant issues an invoice, and then uploads the invoice. The second process is that the merchant self-creates the receipt service platform. In this case, step S106 can be replaced by: sending the receipt application to each merchant, so that each merchant performs receipt issuance for the bill subset based on the receipt service platform. The third process is that the merchant authorizes an invoice serving party to issue an invoice. In this case, an invoice application is sent to the invoice serving party of the merchant, to issue an invoice of the bill subset. In addition to the three cases, when the institution receipt platform is an institution receipt platform on the third-party payment platform, for a scenario serving party on the third-party payment platform, for example, a navigation serving party, a receipt issuance capability corresponding to the scenario serving party is requested to perform receipt issuance. Specifically, a receipt issuance process of the scenario serving party is similar to a receipt issuance process of the merchant.

To improve receipt issuance efficiency of the receipt service platform of the merchant, and enable a plurality of transaction orders associated with the merchant in the receipt generation period to be issued on one receipt, in an optional implementation provided in this embodiment, for any merchant, the receipt application is generated in the following manner: reading bill key information of each transaction bill in the bill subset, and combining the bill key information to obtain combined bill information; and generating a receipt application including the combined bill information and institution element information of the institution.

The bill key information includes information that needs to be used in a receipt generation process, for example, a product name, a product specification, a product unit, a product quantity, a product unit price, and/or a product amount. The institution element information includes institution information that needs to be used in the receipt issuance process, for example, invoice header information, an institution name, a track number, and an institution account. The bill key information and institution element information are information that needs to be written into an invoice and that needs to be provided by the institution in an invoice issuance process from the merchant to the institution.

The combined bill information includes information obtained by collecting bill key information of all transaction bills. For example, there are three transaction bills in the bill subset, and corresponding resource amounts are m1, m2, and m3. In a combination process, in addition to combination of bill key information of the three transaction bills, m1+m2+m3 needs to be calculated to obtain a total resource amount and add the total resource amount to the combined bill information. In addition, the combined bill information can further include information related to another transaction bill. This embodiment sets no limitation thereto.

Specifically, for each merchant, the bill key information of each transaction bill in the bill subset corresponding to the merchant is read, the bill key information is combined to obtain the combined bill information, the institution element information of the institution is read, and the receipt application for the merchant is generated based on the combined bill information and the institution element information, and sent to the receipt service platform of the merchant.

Further, to ensure validity and authenticity of the receipt that is of the bill subset corresponding to the merchant and that is issued by the merchant, and avoid a case in which the merchant distrusts invoice issuance due to a low degree of perception of the merchant for the transaction bill in the bill subset, in an optional implementation provided in this embodiment, after the combined bill information is obtained, the following operations are further performed: sending the combined bill information to a corresponding merchant; and generating, based on a confirmation instruction of each merchant for the combined bill information, a receipt application including the combined bill information and institution element information of the institution.

In a specific execution process, for a bill subset corresponding to any merchant, bill key information of each transaction bill in the bill subset is read, the bill key information is combined to obtain combined bill information, and the combined bill information is sent to a receipt service platform of the merchant. If a confirmation instruction of the merchant for the combined bill information is received, a receipt application including the combined bill information and the institution element information is generated and sent to the receipt service platform of the merchant, to perform receipt issuance.

In addition, step S106 can be further replaced by: sending the receipt application to the receipt service platform of each merchant; and forming a new implementation with another processing step provided in this embodiment.

Step S108: Receive a receipt that is of each bill subset and that is returned by the receipt service platform, read receipt additional information of the receipt, and associate the receipt additional information with the receipt.

The receipt additional information includes information associated with each transaction bill in the bill subset and/or the transaction bill, for example, a transaction order associated with the transaction bill, transaction logistics information, an institution credit rating of the institution, and employee information of an institution employee participating in transaction processing of the transaction bill. In this embodiment, descriptions of the receipt additional information are merely an example. The receipt additional information can further include other information related to the transaction bill, and can be configured based on an actual scenario. This embodiment sets no limitation thereto.

In specific implementations, the receipt that is of the bill subset of the merchant and that is returned by the receipt service platform of each merchant is received. For the receipt of each bill subset, the receipt additional information of the receipt is read and associated with the receipt. To improve adequacy of receipt-related information and associate the receipt-related information with the receipt to improve adequacy of receipt authenticity verification performed subsequently, in an optional implementation provided in this embodiment, the receipt additional information of the receipt is read, and includes: reading a transaction order corresponding to each transaction bill in the bill subset of each receipt, reading transaction logistics information corresponding to each transaction bill, reading the institution credit rating of the institution, and/or reading employee information of a transaction employee corresponding to each transaction bill.

After the read receipt additional information is associated with the receipt, a query capability based on any one of the receipt or the receipt additional information can be provided to the institution. In an optional implementation provided in this embodiment, key information carried in a receipt query request is obtained. The key information includes an order number, an institution identifier, a receipt identifier, a logistics identifier, an employee identifier, and/or a transaction identifier. A receipt associated with the key data is queried.

In this embodiment, after the receipt additional information of the receipt is read, the receipt additional information is associated with the receipt. To further improve adequacy of information associated with the receipt, in an optional implementation provided in this embodiment, each transaction bill in each bill subset of each receipt is further associated with each receipt. A receipt dataset of each receipt is obtained after the receipt additional information of each receipt and each transaction bill in the transaction bill subset are associated with each receipt.

Specifically, step S108 can be further replaced by: receiving the receipt that is of each bill subset and that is returned by the receipt service platform, reading receipt additional information of the receipt, and associating the receipt additional information and a transaction bill in a bill subset of each receipt with the receipt; and forming a new implementation with another processing step provided in this embodiment. Optionally, the receipt dataset of the receipt is obtained after the receipt additional information and the transaction bill in the bill subset of each receipt are associated with the receipt.

Further, to prevent the merchant from forging an invoice or repeatedly issuing an invoice, in an optional implementation provided in this embodiment, after receiving the receipt returned by the receipt service platform, the receipt is sent to the receipt management platform, to perform receipt verification. A receipt verification result sent by the receipt management platform is received, and the receipt verification result and the receipt dataset of the receipt are sent to the institution. Receipt verification includes receipt authenticity verification and receipt repetition verification. In the process of sending the receipt dataset of the receipt to the institution, the receipt in the receipt dataset is parsed to obtain receipt structured data, and the receipt structured data and other information in the receipt dataset are sent to the institution. The receipt management platform includes a tax platform for tax management.

As shown in FIG. 3, when detecting that the receipt generation period of the institution expires, the institution receipt platform obtains the at least one transaction bill of the institution in the receipt generation period, classifies the transaction bill based on the merchant identifier, obtains the bill subset corresponding to each merchant, sends the invoice application to the invoice serving party of each merchant, to issue the invoice of the bill subset, receives the invoice that is of each bill subset and that is returned by the receipt service platform, and performs authenticity verification and repetition verification on the invoice. If verification succeeds, the transaction bill in the bill subset, the transaction order associated with the transaction bill, the transaction employee information, the transaction logistics information, the institution credit rating, and the merchant credit rating are associated with the invoice. An invoice dataset is sent to the institution through a receipt management product of the institution.

After the receipt additional information of the receipt is associated with the receipt, a receipt query based on the receipt identifier, the receipt number, the transaction identifier, the order identifier, the logistics identifier, the institution identifier, and the employee information, an output capability, etc. are provided. To improve a degree of perception for the receipt dataset in a receipt query process, in an optional implementation provided in this embodiment, if a receipt query request of the employee or the institution is received, the following operations are performed: querying an associated target receipt based on key information carried in a receipt query request of the institution, and reading a target receipt dataset of the target receipt; parsing the target receipt in the target receipt dataset, to obtain receipt structured data; and returning, to the institution, the receipt structured data and a transaction order, transaction logistics information, an institution credit rating, a transaction bill, and/or employee information that are included in the target receipt dataset.

Specifically, in a process of returning the receipt dataset to the institution that performs querying, to improve a degree of perception, for the receipt, of the employee or the institution that performs querying, the target receipt that is in the target receipt dataset and that is queried based on the key information carried in the receipt query request of the employee or the institution is parsed, to obtain the receipt structured data, and the receipt structured data and information other than the receipt in the receipt dataset are returned to the employee or the institution.

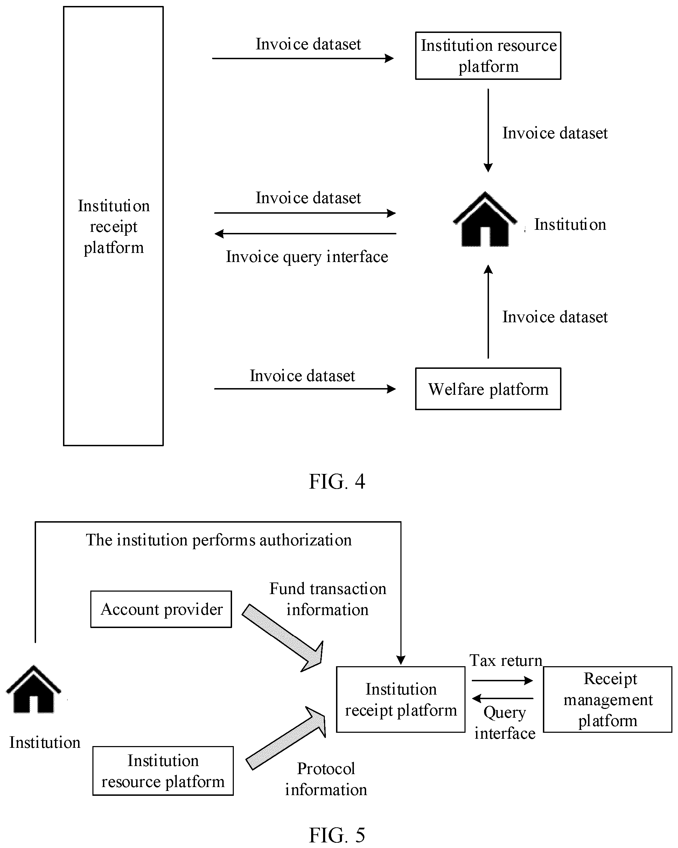

The receipt dataset can be sent to the institution in three ways in a process of sending the receipt dataset to the institution. As shown in FIG. 4, in the first way, the institution receipt platform directly sends the invoice dataset to the institution. In the second way, the institution receipt platform sends the invoice dataset to an institution resource platform of the institution, and the institution resource platform sends the invoice dataset to the institution. In the third way, the institution receipt platform sends the invoice dataset to a welfare platform corresponding to the institution, and the welfare platform sends the invoice dataset to the institution. The institution provides welfare to the employee, and welfare content includes consumption performed on the welfare platform based on the payment voucher of the institution.

In addition to a case in which the receipt additional information is associated with the receipt, data integration can be performed with an account provider of the institution and the institution resource platform of the institution, to generate a resource circulation record of the institution. The resource circulation record includes a declaration form for tax processing that needs to be performed by the institution, etc.

In an optional implementation provided in this embodiment, the resource circulation record of the institution is generated in the following manner: generating a resource inflow record of the institution based on a first receipt of the institution, and generating a resource outflow record of the institution based on a second receipt of the institution; and generating a resource circulation record of the institution based on the resource inflow record, the resource outflow record, and institution data. Optionally, the institution data includes at least one of the following: resource circulation data of the institution, and protocol information between the institution and a target merchant or serving party; and correspondingly, the institution data is obtained in the following manner: obtaining resource circulation data sent by an account provider of the institution, and/or obtaining the protocol information sent by an institution resource platform of the institution.

The first receipt includes a corresponding input receipt generated after the institution expends a resource. The resource outflow record is, for example, an input data record. The second receipt includes a corresponding output receipt generated after the institution receives a resource. Correspondingly, the resource inflow record is, for example, an output data record.

Specifically, the input data record of the institution is generated based on the input receipt of the institution, the output data record of the institution is generated based on the output receipt of the institution, the resource circulation data that is of the institution and that is sent by the account provider of the institution is obtained, and the protocol information sent by the institution resource platform of the institution is obtained. The resource circulation record of the institution is generated based on at least one of the resource circulation data, the protocol information, the input data record, and the output data record, and is sent to the instrument management platform, to perform tax processing on the receipt management platform.

It should be noted that, in a process of generating the resource circulation record, the resource circulation record can be generated in the above-mentioned manner when it is detected that a record generation period expires. The record generation period can be consistent with the receipt generation period. In other words, the resource circulation record is generated each time a receipt is generated. The record generation period can be inconsistent with the receipt generation period. If the record generation period is inconsistent with the receipt generation period, when the record generation period expires, the resource circulation record of the institution is generated for the receipt in the period. In other words, the resource circulation record of the institution is generated for the receipt in the record generation period, and is sent to the receipt management platform.

As shown in FIG. 5, when the institution authorizes the institution receipt platform to generate the resource circulation record of the institution, fund transaction information is read from the account provider of the institution based on the record generation period, the protocol information of the institution is read from the institution resource platform of the institution, and a tax return is generated based on the fund transaction information, the protocol information, the input data, and the output data, and is sent to the receipt management platform. In addition, a query interface can be provided to the receipt management platform, so that the receipt management platform performs information querying.

In conclusion, in the receipt processing method for a transaction bill provided in this embodiment, the transaction bill obtained after transaction processing is performed with the merchant based on the payment voucher of the institution is obtained, and the receipt generation policy of the institution is read. If the receipt generation policy of the institution is the instant generation policy, the receipt application is sent to the receipt service platform of the merchant, to perform receipt issuance for the transaction bill. The receipt that is of the transaction bill and that is returned by the receipt service platform is obtained, the receipt additional information of the receipt is read, and the receipt additional information is associated with the receipt, to obtain the receipt dataset of the receipt. If the receipt generation policy of the institution is the periodic generation policy, the transaction bill is stored. If it is detected that the receipt generation period of the institution expires, the at least one transaction bill of the institution in the receipt generation period is read, the at least one transaction bill is classified based on the merchant identifier, to obtain the bill subset corresponding to each merchant, and the receipt application is generated based on each bill subset and the institution element information, and is sent to the receipt service platform of the merchant corresponding to each bill subset, to perform receipt issuance for the bill subset. The receipt that is of each bill subset and that is returned by the receipt service platform is received, the receipt additional information of the receipt is read, and is associated with the receipt, to obtain the receipt dataset of the receipt. In this way, receipt issuance is automatically performed for a transaction based on the payment voucher of the institution, and the employee does not need to perform receipt issuance or reimbursement offline. In addition, information related to the transaction bill is associated with the receipt, to improve authenticity of the receipt.

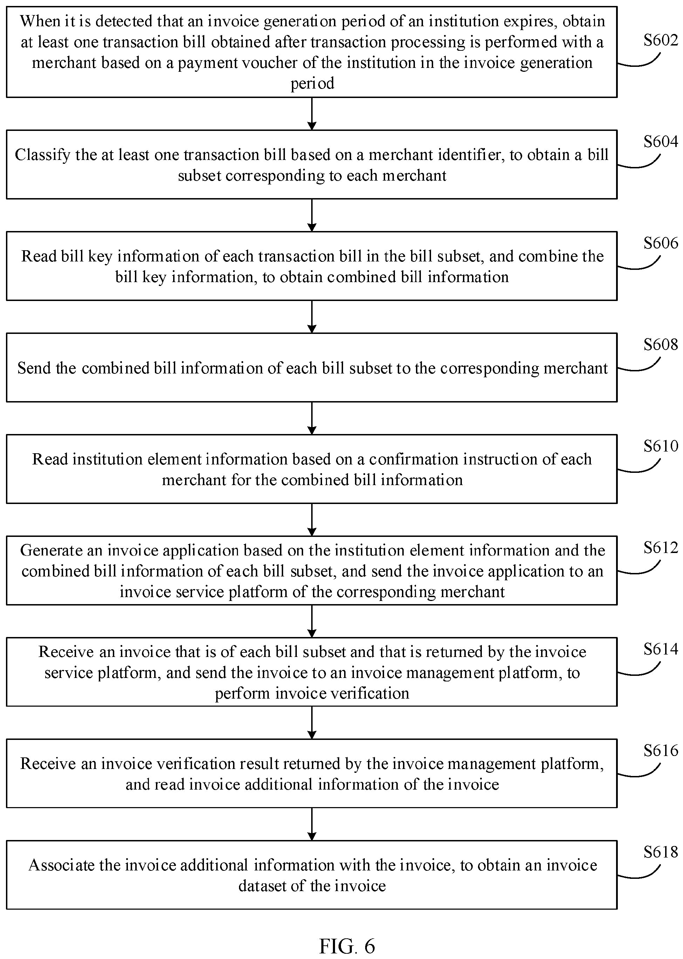

The following further describes, by using an example in which a receipt processing method for a transaction bill provided in the embodiments is applied to an invoice service scenario, the receipt processing method for a transaction bill provided in the embodiments. As shown in FIG. 6, the receipt processing method for a transaction bill that is applied to the invoice service scenario specifically includes steps S602 to S618.

Step S602: When it is detected that an invoice generation period of an institution expires, obtain at least one transaction bill obtained after transaction processing is performed with a merchant based on a payment voucher of the institution in the invoice generation period.

Step S604: Classify the at least one transaction bill based on a merchant identifier, to obtain a bill subset corresponding to each merchant.

Step S606: Read bill key information of each transaction bill in the bill subset, and combine the bill key information, to obtain combined bill information.

Step S608: Send the combined bill information of each bill subset to the corresponding merchant.

Step S610: Read institution element information based on a confirmation instruction of each merchant for the combined bill information.

Step S612: Generate an invoice application based on the institution element information and the combined bill information of each bill subset, and send the invoice application to an invoice service platform of the corresponding merchant.

Step S614: Receive an invoice that is of each bill subset and that is returned by the invoice service platform, and send the invoice to an invoice management platform, to perform invoice verification.

Step S616: Receive an invoice verification result returned by the invoice management platform, and read invoice additional information of the invoice.

The invoice additional information includes the invoice verification result and the transaction bill.

Step S618: Associate the invoice additional information with the invoice, to obtain an invoice dataset of the invoice.

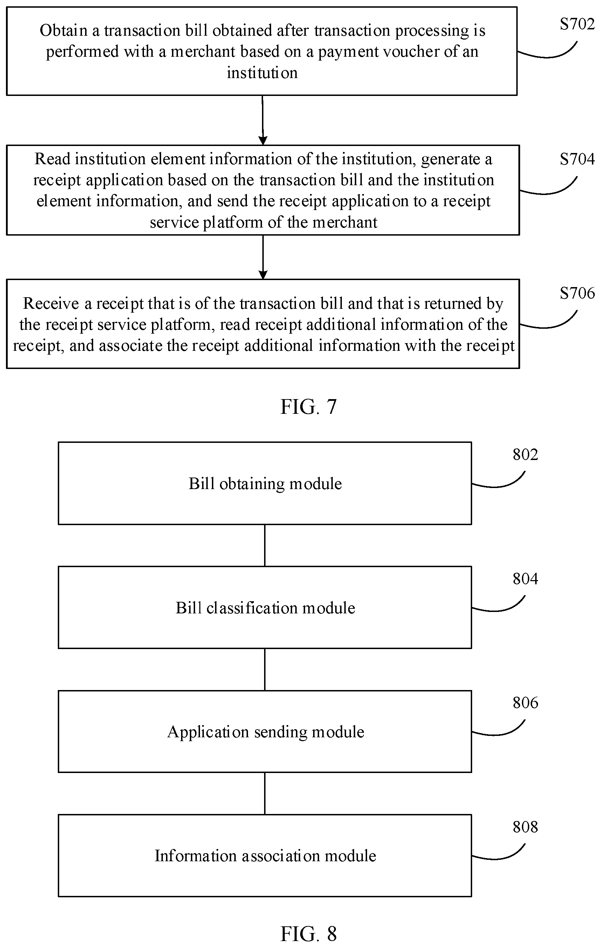

Another embodiment of a receipt processing method for a transaction bill provided in this specification is as follows: As shown in FIG. 7, the receipt processing method for a transaction bill provided in this embodiment specifically includes step S702 to step S708.

Step S702: Obtain a transaction bill obtained after transaction processing is performed with a merchant based on a payment voucher of an institution.

Step S704: Read institution element information of the institution, generate a receipt application based on the transaction bill and the institution element information, and send the receipt application to a receipt service platform of the merchant.

In addition, step S704 can also be replaced by: sending a receipt application for the transaction bill to a receipt service platform of the merchant, to perform receipt issuance for a bill subset.

Step S706: Receive a receipt that is of the transaction bill and that is returned by the receipt service platform, read receipt additional information of the receipt, and associate the receipt additional information with the receipt.

The receipt processing method for a transaction bill provided in this embodiment is similar to the receipt processing method for a transaction bill provided in the above-mentioned embodiment in an execution process. For reading of this embodiment, references can be made to related content of the above-mentioned embodiment.

An embodiment of a receipt processing apparatus for a transaction bill provided in this specification is as follows: The above-mentioned embodiment provides a receipt processing method for a transaction bill. Correspondingly, a receipt processing apparatus for a transaction bill is further provided. The following describes the receipt processing apparatus for a transaction bill with reference to the accompanying drawings.

FIG. 8 is a schematic diagram of a receipt processing apparatus for a transaction bill according to an embodiment.

The apparatus embodiment corresponds to the method embodiment, and therefore, is described briefly. For a related part, references can be made to corresponding descriptions in the method embodiments. The following described apparatus embodiment is merely an example.

An embodiment provides a receipt processing apparatus for a transaction bill, including: a bill obtaining module 802, configured to obtain at least one transaction bill obtained after transaction processing is performed with a merchant based on a payment voucher of an institution; a bill classification module 804, configured to run if a receipt generation policy of the institution is a periodic generation policy, where the bill classification module 804 is configured to classify the at least one transaction bill based on a merchant identifier, to obtain a bill subset corresponding to each merchant; an application sending module 806, configured to send a receipt application to a receipt service platform of each merchant, to perform receipt issuance for the bill subset; and an information association module 808, configured to: receive a receipt that is of each bill subset and that is returned by the receipt service platform, read receipt additional information of the receipt, and associate the receipt additional information with the receipt.

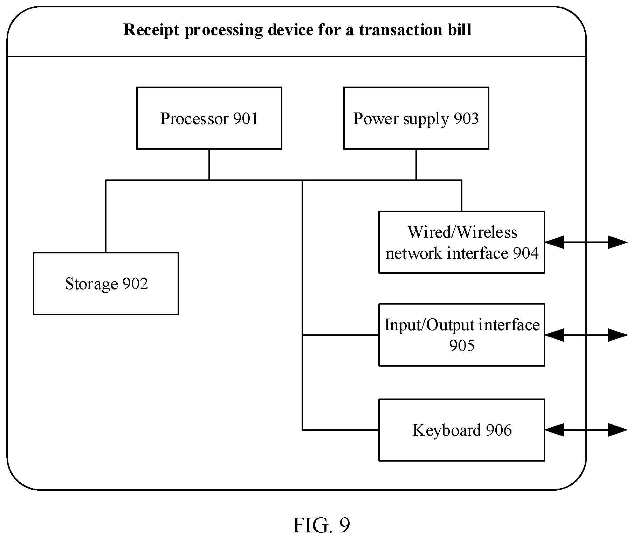

An embodiment of a receipt processing device for a transaction bill provided in this specification is as follows: Corresponding to the above described receipt processing method for a transaction bill, based on the same technical concept, one or more embodiments of this specification further provide a receipt processing device for a transaction bill. The receipt processing device for a transaction bill is configured to perform the above provided receipt processing method for a transaction bill. FIG. 9 is a schematic structural diagram of a receipt processing device for a transaction bill according to one or more embodiments of this specification.

The receipt processing device for a transaction bill provided in this embodiment includes: As shown in FIG. 9, the receipt processing device for a transaction bill can differ greatly due to different configurations or performance, and can include one or more processors 901 and a storage 902. The storage 902 can store one or more storage applications or data. The storage 902 can be a temporary storage or persistent storage. The application program stored in the storage 902 can include one or more modules (not shown in the figure), and each module can include a series of computer-executable instructions in the receipt processing device for a transaction bill. Still further, the processor 901 can be configured to communicate with the storage 902, to execute a series of computer-executable instructions in the storage 902 on the receipt processing device for a transaction bill. The receipt processing device for a transaction bill can further include one or more power supplies 903, one or more wired or wireless network interfaces 904, one or more input/output interfaces 905, one or more keyboards 906, etc.

In a specific embodiment, the receipt processing device for a transaction bill includes a storage and one or more programs. The one or more programs are stored in the storage, the one or more programs can include one or more modules, each module can include a series of computer-executable instructions in the receipt processing device for a transaction bill, and one or more processors are configured to perform the one or more programs, including performing the following computer-executable instructions: obtaining at least one transaction bill obtained after transaction processing is performed with a merchant based on a payment voucher of an institution; classifying the at least one transaction bill based on a merchant identifier if a receipt generation policy of the institution is a periodic generation policy, to obtain a bill subset corresponding to each merchant; sending a receipt application to a receipt service platform of each merchant, to perform receipt issuance for the bill subset; and receiving a receipt that is of each bill subset and that is returned by the receipt service platform, reading receipt additional information of the receipt, and associating the receipt additional information with the receipt.

An embodiment of a storage medium provided in this specification is as follows: Corresponding to the above described receipt processing method for a transaction bill, based on the same technical concept, one or more embodiments of this specification further provide a storage medium.

The storage medium provided in this embodiment is configured to store computer-executable instructions. When the computer-executable instructions are executed by a processor, the following procedure is implemented: obtaining at least one transaction bill obtained after transaction processing is performed with a merchant based on a payment voucher of an institution; classifying the at least one transaction bill based on a merchant identifier if a receipt generation policy of the institution is a periodic generation policy, to obtain a bill subset corresponding to each merchant; sending a receipt application to a receipt service platform of each merchant, to perform receipt issuance for the bill subset; and receiving a receipt that is of each bill subset and that is returned by the receipt service platform, reading receipt additional information of the receipt, and associating the receipt additional information with the receipt.

It should be noted that the embodiment of the storage medium in this specification and the embodiment of the receipt processing method for a transaction bill in this specification are based on the same invention concept. Therefore, for a specific implementation of this embodiment, references can be made to an implementation of the above corresponding method. Details are omitted for simplicity.

Specific embodiments of this specification are described above. Other embodiments fall within the scope of the appended claims. In some cases, the actions or steps described in the claims can be performed in an order different from that in the embodiments, and the desired results can still be achieved. In addition, the process depicted in the accompanying drawings does not necessarily need a particular order or consecutive order to achieve the desired results. In some implementations, multi-tasking and concurrent processing are feasible or may be advantageous.

In the 1930s, whether a technical improvement is a hardware improvement (for example, an improvement to a circuit structure, such as a diode, a transistor, or a switch) or a software improvement (an improvement to a method procedure) can be clearly distinguished. However, with development of technologies, improvement to many existing method procedures can be considered as direct improvement to hardware circuit structures. Almost all designers program an improved method procedure into a hardware circuit, to obtain a corresponding hardware circuit structure. Therefore, improvement to a method procedure can be implemented by using a hardware entity module. For example, a programmable logic device (PLD) (for example, a field programmable gate array (FPGA)) is such an integrated circuit, and a logical function of the programmable logic device is determined by a user through device programming. The designer independently performs programming to "integrate" a digital system to a PLD without requesting a chip manufacturer to design and manufacture an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit that implements a logical method procedure can be readily obtained once the method procedure is logically programmed by using the several hardware description languages described above and is programmed into an integrated circuit.

A controller can be implemented by using any appropriate method. For example, the controller can be a microprocessor or a processor, or a computer readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. A storage controller can also be implemented as a part of the control logic of the storage. A person skilled in the art also knows that in addition to implementing the controller by using only the computer-readable program code, logic programming can be performed on method steps to enable the controller to implement the same function in forms of the logic gate, the switch, the application-specific integrated circuit, the programmable logic controller, the built-in microcontroller, etc. Therefore, the controller can be considered as a hardware component, and an apparatus included in the controller for implementing various functions can also be considered as a structure in the hardware component. Alternatively, the apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatuses are described by dividing the apparatus into various units based on functions. Certainly, when some embodiments of this specification are implemented, a function of each unit can be implemented in one or more pieces of software and/or hardware.

A person skilled in the art should understand that one or more embodiments of this specification can be provided as methods, systems, or computer program products. Therefore, the one or more embodiments of this specification can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in this specification.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory may include a non-persistent memory, a random access memory (RAM), a non-volatile memory, and/or another form in a computer-readable medium, for example, a read-only memory (ROM) or a flash memory (flash RAM). The memory is an example of the computer-readable medium.

The computer-readable medium includes a persistent and a non-persistent, a removable and a non-removable medium, which implement information storage by using any method or technology. Information can be a computer-readable instruction, a data structure, a program module, or other data. Examples of the computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in this specification, the computer readable medium does not include transitory media such as a modulated data signal and carrier.

It is worthwhile to further note that the terms "include", "include", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

The one or more embodiments of this specification can be described in the general context of computer-executable instructions executed by a computer, for example, a program module. Usually, the program module includes a routine, a program, an object, a component, a data structure, etc. for executing a specific task or implementing a specific abstract data type. The one or more embodiments of this specification can also be practiced in distributed computing environments. In the distributed computing environments, tasks are performed by remote processing devices that are connected through a communication network. In the distributed computing environments, the program module can be located in both local and remote computer storage media including storage devices.

The embodiments of this specification are described in a progressive way. For the same or similar parts of the embodiments, mutual references can be made to the embodiments. Each embodiment focuses on a difference from other embodiments. Particularly, the system embodiments are basically similar to the method embodiments, and therefore are described briefly. For related parts, references can be made to some descriptions in the method embodiments.

The above-mentioned descriptions are merely one or more embodiments of this document and are not intended to limit this specification. A person skilled in the art can make various changes and variations to this specification. Any modification, equivalent replacement, or improvement made without departing from the spirit and principle of this specification shall fall within the scope of the claims of this specification.

## Claims

1. A receipt processing method for a transaction bill, comprising:
obtaining at least one transaction bill obtained after transaction processing is performed with a merchant based on a payment voucher of an institution;
classifying the at least one transaction bill based on a merchant identifier if a receipt generation policy of the institution is a periodic generation policy, to obtain a bill subset corresponding to each merchant;
sending a receipt application to a receipt service platform of each merchant, to perform receipt issuance for the bill subset; and
receiving a receipt that is of each bill subset and that is returned by the receipt service platform, reading receipt additional information of the receipt, and associating the receipt additional information with the receipt.

2. The receipt processing method for a transaction bill according to claim 1, wherein the receipt application is generated in the following manner:
reading bill key information of each transaction bill in the bill subset, and combining the bill key information to obtain combined bill information; and
generating a receipt application comprising the combined bill information and institution element information of the institution.

3. The receipt processing method for a transaction bill according to claim 2, wherein after the operation of reading bill key information of each transaction bill in the bill subset, and combining the bill key information to obtain combined bill information, and before the operation of generating a receipt application comprising the combined bill information and institution element information of the institution, the method further comprises:
sending the combined bill information to a corresponding merchant; and
performing, based on a confirmation instruction of each merchant for the combined bill information, the operation of generating a receipt application comprising the combined bill information and institution element information of the institution.

4. The receipt processing method for a transaction bill according to claim 1, wherein the reading receipt additional information of the receipt comprises:
reading a transaction order corresponding to each transaction bill in a bill subset of each receipt;
reading transaction logistics information corresponding to each transaction bill;
reading an institution credit rating of the institution; and/or
reading employee information of a transaction employee corresponding to each transaction bill.

5. The receipt processing method for a transaction bill according to claim 1, further comprising:
obtaining key information carried in a receipt query request, wherein the key information comprises an order number, an institution identifier, a receipt identifier, a logistics identifier, an employee identifier, and/or a transaction identifier; and
querying a receipt associated with the key data.

6. The receipt processing method for a transaction bill according to claim 1, further comprising:
associating each transaction bill in a bill subset of each receipt with each receipt, wherein
obtaining a receipt dataset of each receipt after the receipt additional information of each receipt and each transaction bill in the transaction bill subset are associated with each receipt.

7. The receipt processing method for a transaction bill according to claim 6, further comprising:
querying an associated target receipt based on key information carried in a receipt query request of the institution, and reading a target receipt dataset of the target receipt;
parsing the target receipt in the target receipt dataset, to obtain receipt structured data; and
returning, to the institution, the receipt structured data and a transaction order, transaction logistics information, an institution credit rating, a transaction bill, and/or employee information that are comprised in the target receipt dataset.

8. The receipt processing method for a transaction bill according to claim 6, wherein after the step of receiving a receipt that is of each bill subset and that is returned by the receipt service platform, reading receipt additional information of the receipt, and associating the receipt additional information with the receipt is performed, the method further comprises:
sending the receipt to a receipt management platform, to perform receipt verification; and
receiving a receipt verification result sent by the receipt management platform, and sending the receipt verification result and a receipt dataset of the receipt to the institution.

9. The receipt processing method for a transaction bill according to claim 1, further comprising:
if the receipt generation policy of the institution is an instant generation policy, sending a receipt application to the receipt service platform of the merchant, to perform receipt issuance for the at least one transaction bill; and
receiving a receipt that is of the at least one transaction bill and that is returned by the receipt service platform, reading receipt additional information of the receipt, and associating the read receipt additional information and the at least one transaction bill with the receipt, to obtain a receipt dataset of the receipt.

10. The receipt processing method for a transaction bill according to claim 1, wherein after the step of classifying the at least one transaction bill based on a merchant identifier if a receipt generation policy of the institution is a periodic generation policy, to obtain a bill subset corresponding to each merchant is performed, and before the step of sending a receipt application to a receipt service platform of each merchant, to perform receipt issuance for the bill subset is performed, the method further comprises:
querying a receipt issuance record and/or a receipt authorization record of each merchant; and
using, as the receipt service platform, a service platform corresponding to a receipt issuance address corresponding to the receipt issuance record or an authorized platform address recorded in the receipt authorization record, and performing the step of sending a receipt application to a receipt service platform of each merchant, to perform receipt issuance for the bill subset.

11. The receipt processing method for a transaction bill according to claim 10, further comprising:
if a query result for a target merchant is empty, generating a receipt generation request based on a target bill subset corresponding to the target merchant, and sending the receipt generation request to the target merchant; and
obtaining a target receipt that is of the target bill subset and that is sent by the target merchant, and reading target additional information of the target receipt; and
associating the target additional information and a transaction bill in the target bill subset with the target receipt.

12. The receipt processing method for a transaction bill according to claim 1, further comprising:
generating a resource inflow record of the institution based on a first receipt of the institution, and generating a resource outflow record of the institution based on a second receipt of the institution; and
generating a resource circulation record of the institution based on the resource inflow record, the resource outflow record, and institution data.

13. The receipt processing method for a transaction bill according to claim 12, wherein
the institution data comprises at least one of the following:
resource circulation data of the institution, and protocol information between the institution and a target merchant or serving party; and
correspondingly, the institution data is obtained in the following manner:
obtaining resource circulation data sent by an account provider of the institution, and/or obtaining the protocol information sent by an institution resource platform of the institution.

14. A receipt processing apparatus for a transaction bill, comprising:
a bill obtaining module, configured to obtain at least one transaction bill obtained after transaction processing is performed with a merchant based on a payment voucher of an institution;
a bill classification module, configured to run if a receipt generation policy of the institution is a periodic generation policy, wherein the bill classification module is configured to classify the at least one transaction bill based on a merchant identifier, to obtain a bill subset corresponding to each merchant;
an application sending module, configured to send a receipt application to a receipt service platform of each merchant, to perform receipt issuance for the bill subset; and
an information association module, configured to: receive a receipt that is of each bill subset and that is returned by the receipt service platform, read receipt additional information of the receipt, and associate the receipt additional information with the receipt.

15. A receipt processing device for a transaction bill, comprising:
a processor; and
a storage, configured to store computer-executable instructions, wherein when the computer-executable instructions are executed, the processor is enabled to perform the following operations:
obtaining at least one transaction bill obtained after transaction processing is performed with a merchant based on a payment voucher of an institution;
classifying the at least one transaction bill based on a merchant identifier if a receipt generation policy of the institution is a periodic generation policy, to obtain a bill subset corresponding to each merchant;
sending a receipt application to a receipt service platform of each merchant, to perform receipt issuance for the bill subset; and
receiving a receipt that is of each bill subset and that is returned by the receipt service platform, reading receipt additional information of the receipt, and associating the receipt additional information with the receipt.

16. A storage medium, configured to store computer-executable instructions, wherein when the computer-executable instructions are executed by a processor, the following procedure is implemented:
obtaining at least one transaction bill obtained after transaction processing is performed with a merchant based on a payment voucher of an institution;
classifying the at least one transaction bill based on a merchant identifier if a receipt generation policy of the institution is a periodic generation policy, to obtain a bill subset corresponding to each merchant;
sending a receipt application to a receipt service platform of each merchant, to perform receipt issuance for the bill subset; and
receiving a receipt that is of each bill subset and that is returned by the receipt service platform, reading receipt additional information of the receipt, and associating the receipt additional information with the receipt.
